# EUROPEAN PATENT SPECIFICATION

(11) **EP 2 268 137 B1**
(45) Date of publication and mention of the grant of the patent: **11.10.2017**
(21) Application number: 09727402.1
(22) Date of filing: 31.03.2009
(51) Int. Cl.: A01N 43/50, A01N 43/40, A01N 43/653, A01N 25/04, A01P 3/00

(54) **PESTICIDAL AQUEOUS SUSPENSION COMPOSITION**
PESTIZIDE WÄSSRIGE SUSPENSIONSZUSAMMENSETZUNG
COMPOSITION PESTICIDE EN SUSPENSION AQUEUSE

(30) Priority: 31.03.2008 JP 2008090141
(43) Date of publication of application: 05.01.2011
(73) Proprietor: ISHIHARA SANGYO KAISHA, LTD., Osaka-shi Osaka 550-0002 (JP)
(72) Inventor: ISHIHARA, Yoshiaki, Kusatsu-shi, Shiga 525-0025 (JP); SHINDO, Takeshi, Kusatsu-shi, Shiga 525-0025 (JP)
(74) Representative: Hoffmann Eitle
(86) International application number: PCT/JP2009/057038
(87) International publication number: WO 2009/123346

(56) References cited:
- EP-A1- 0 943 241
- WO-A1-00/35284
- WO-A1-2007/104408
- CN-A- 101 099 497
- STEVENS P J G: "ORGANOSILICONE SURFACTANTS AS ADJUVANTS FOR AGROCHEMICALS" PESTICIDE SCIENCE, ELSEVIER APPLIED SCIENCE PUBLISHER. BARKING, GB, vol. 38, no. 2/03, 1 January 1993 (1993-01-01), pages 103-122, XP000408739 ISSN: 0031-613X
- M. KNOCHE, H. TAMURA, M. BUKOVAC: "Performance and Stability of the Organosilicone Surfactant L-77: Effect of pH, Concentration and Temperature" JOURNAL OF AGRICULTURAL AND FOOD CHEMISTRY, vol. 39, January 1991 (1991-01), pages 202-206, XP002598920 ISSN: 0021-8561
- S. MITANI ET AL: 'Control of Cucumber Downy Mildew by Cyazofamid' J. PESTICIDE SCI vol. 28, 01 January 2003, pages 64 - 68, XP055125121
- EMULSION E ANTIFOAM: 'Technical Data Sheet - AF 9020 E Antifoam Emulsion' INTERNET CITATION, [Online] 01 January 2007, XP055125135 Retrieved from the Internet: <URL:https://www.momentive.com/products/sho w-technical-datasheet> [retrieved on 2014-06-25]
- 'SAFETY DATA SHEET RANMAN A - RANMAN SUPER A' INTERNET CITATION, [Online] 01 January 1999, XP055125264 Retrieved from the Internet: <URL:http://www84.ws12.tijdelijke-url.nl/pd f/UK/RanmanSuperA_MSDS.pdf> [retrieved on 2014-06-26]
- KOSSWIG K: 'Surfactants' INTERNET CITATION, [Online] 01 January 2005, pages 1 - 76, XP002554127 DOI: 10.1002/14356007.A25_747 ULLMANN'S ENCYCLOPEDIA OF INDUSTRIAL CHEMISTRY. ELECTRONICRELEASE, XX, XX Retrieved from the Internet: <URL:http://mrw.interscience.wiley.com/emrw /9783527306732/ueic/article/a25_747/current /pdf> [retrieved on 2009-11-05]

## Description

### Technical Field

The present invention relates to technology for manufacturing pesticides, more specifically, the present invention relates to a pesticidal aqueous suspension composition comprising cyazofamid, a sparingly water-soluble pesticide, as an active ingredient compound.

### Background Art

WO 98/48628 discloses a composition for controlling harmful bioorganisms with enhanced activity, comprising an imidazole compound including cyazofamid as an active ingredient (a) and, a silicone surface active agent as an activity-enhancing ingredient (c). Also, it discloses that this composition can be blended with various adjuvants, such as an antifoaming agent, a stabilizer, a dispersant and a thickener, and then formulated into various forms. Furthermore, it discloses that an aqueous suspension formulation of this composition can be applied to harmful bioorganisms as is the case of an aqueous dispersion thereof. However, WO 98/48628 does not disclose use of a viscosity-reducing agent as various adjuvants.

Also, WO 98/48628 exemplifies organosilicone surface active agents, such as polyalkylene oxide-modified polymethylsiloxane nonionic surface active agents, as the silicone surface active agent. However, WO 98/48628 does not disclose a generation of a large amount of foams due to the silicone surface active agent in the composition and a controlling method therefor.

WO 2005/117580 discloses a low-foaming aqueous formulation which is used for crop protection. This formulation is characterized by a combination of a water-soluble pesticide and a silicone antifoaming agent. However, WO 2005/117580 does not disclose a combination of a sparingly water-soluble pesticidal active ingredient and a silicone antifoaming agent.

S. Mitani et al., J. Pesticide Sci., 28, 64-68 (2003) relates to experiments performed on the control of cucumber downy mildew by cyazofamid, and reports that the efficacy of cyazofamid could be remarkably enhanced when cyazofamid was tank mixed with an organosilicone surfactant. Makupika (KF-640) and Silwet L-77 are mentioned as specific examples of such wetting agents.

### Disclosure of the Invention

### Technical Problem

When an organosilicone surface active agent is added to a pesticidal aqueous suspension composition containing the sparingly water-soluble pesticidally active ingredient compound cyazofamid for the purpose of attaining activity enhancement and formulation, the following problems arise: such that (1) the viscosity of the composition increases; (2) a large amount of foams due to the organosilicone surface active agent tends to generate at the time of preparation of a spray solution. Therefore, it is difficult to measure the composition and prepare the spray solution.

### Technical Solution

As a result of extensive and intensive investigations in order to solve the foregoing problems, the present inventors have found that that use of a viscosity-reducing agent together with an antifoaming agent can provide a stable composition which is suppressed in increasing in the viscosity of a composition and generating foams at the time of dilution with water as compared with known compositions and the composition can be easily sprayed onto crops, and have completed the present invention.

Namely, the invention relates to a pesticidal aqueous suspension composition comprising
(a) cyazofamid,
(b) a polyalkylene-modified polymethylsiloxane non-ionic surface active agent,
(c) a viscosity-reducing agent selected from dihydric alcohol and a polyoxyethylene styrylphenyl ether anionic surface active agent,
(d) an antifoaming agent,
(e) a pH adjustor selected from a buffer, an acid, a salt and a base, and
(f) a dispersant.
This composition is referred to as the present composition hereinafter. Preferred embodiments thereof are as described in the appended dependent claims and/or in the following detailed description.

### Advantageous Effects

The present invention provides a pesticidal aqueous suspension composition which is suppressed in increasing in the viscosity, is easy to measure, hardly generates foams at the time of dilution with water and is easy to prepare a spray solution.

### Best Mode for Carrying Out the Invention

The active ingredient compound (a) of a sparingly water-soluble pesticide in the present composition is the fungicide cyazofamid (common name).Examples of the polyalkylene-modified polymethylsiloxane nonionic surface active agent (b) in the present composition include Makupika (trade name, manufactured by Ishihara Sangyo Kaisha, Ltd.), KF-644 (trade name, manufactured by Shin-Etsu Chemical Co., Ltd.), SILWET L-77 (trade name, manufactured by Momentive Performance Materials), SILWET 408 (trade name, manufactured by Momentive Performance Materials) and SLIPPA (trade name, manufactured by INTERAGRO). When the polyalkylene-modified polymethylsiloxane nonionic surface active agent is used, spreading properties of a spray solution on foliages can be enhanced.

When the above surface active agent (b) is added to the present composition, the viscosity of the composition increases depending upon its blend weight ratio, thereby resulting in a hindrance in the handling, such as measuring at the time of spraying. In order to prevent such a problem the viscosity-reducing agent (c) is used in the pesticidal aqueous suspension composition of the present invention. The viscosity-reducing agent (c) is selected from dihydric alcohol and a polyoxyethylene styrylphenyl ether anionic surface active agent. Examples of the dihydric alcohol include alkylene glycol, such as ethylene glycol and propylene glycol. Among these, propylene glycol is preferably used. Furthermore, the dihydric alcohol also has an effect as an antifreezing agent. The dihydric alcohol is used in an amount of 2-50%, and preferably 5-30%, in terms of wt.-% in the composition.

Also, examples of the polyoxyethylene styrylphenyl ether anionic surface active agent include a salt of polyoxyethylene styrylphenyl ether phosphoric acid ester, such as a potassium salt of polyoxyethylene tristyrylphenyl ether phosphoric acid ester and a triethanolamine salt of polyoxyethylene tristyrylphenyl ether phosphoric acid ester; a salt of polyoxyethylene styrylphenyl ether sulfuric acid ester, such as a sodium salt of polyoxyethylene tristyrylphenyl ether sulfuric acid ester and a sodium salt of polyoxyethylene distyrylphenyl ether sulfuric acid ester; an ammonium salt of polyoxyethylene styrylphenyl ether sulfuric acid ester, such as an ammonium salt of polyoxyethylene tristyrylphenyl ether sulfuric acid ester and an ammonium salt of polyoxyethylene distyrylphenyl ether sulfuric acid ester. Among these, a salt of polyoxyethylene styrylphenyl ether phosphoric acid ester is preferable, and above all, a potassium salt of polyoxyethylene tristyrylphenyl etherphosphoric acid ester is more preferably used. The polyoxyethylene styrylphenyl ether anionic surface active agent also has an effect as a dispersant. The polyoxyethylene styrylphenyl ether anionic surface active agent is used in an amount of 0.5-10%, and preferably 2-6%, in terms of wt.-% in the composition.

When the present composition is diluted with water, a large amount of foams may be generated due to the surface active agent (b), thereby resulting in a hindrance in the preparation of a spray solution. In order to solve such a problem, it is preferable that the antifoaming agent (d) is added to the composition so that the composition comes to be suppressed in generating foams. Examples of the antifoaming agent (d) include silicone antifoaming agents containing, as an active ingredient, polydimethylsiloxane, such as Rhodorsil Antifoam (registered trademark) 416 (trade name, manufactured by Rhodia Nicca Ltd.), Rhodorsil Antifoam (registered trademark) 481 (trade name, manufactured by Rhodia Nicca Ltd.), Rhodorsil Antifoam (registered trademark) 432 (trade name, manufactured by Rhodia Nicca Ltd.), KM 72 (trade name, manufactured by Shin-Etsu Chemical Co., Ltd.), KM 75 (trade name, manufactured by Shin-Etsu Chemical Co., Ltd.) and Anti-mousse (trade name, registered trademark; BELCHIM CROP PROTECTION). The silicone antifoaming agent as referred to herein includes a silica-containing antifoaming agent. The antifoaming agent is used in an amount of 0.3-10, and preferably 1-8, in terms of a weight ratio relative to the formulation.

The pH adjustor (e) in the present composition is selected from a buffer, such as a phosphate buffer, Clark-Lubs buffer, an imidazole-hydrochloric acid buffer, a veronal buffer, Britton-Robinson buffer, and Carmody buffer; acid, such as inorganic acid and organic acid; a salt, such as an alkali metal salt of inorganic acid or organic acid, an alkaline earth metal salt of inorganic acid or organic acid and an ammonium salt of inorganic acid or organic acid; and a base, such as a hydroxide of an alkaline metal or an alkaline earth metal. With respect to the surface active agent (b) in the composition, its stability is maintained only in a neutral region, and therefore, the pH in the composition is adjusted within the range of 6-8 with the pH adjustor (e).

Examples of the dispersant (f) which is used in the present composition include an anionic surface active agent, such as a naphthalensulfonate, a salt of a naphthalene sulfonic acid-formaldehyde condensate, an alkylnaphthalenesulfonate, a salt of an alkylnaphthalenesulfonic acid-formaldehyde condensate, phenolsulfonate, a salt of a phenolsulfonic acid-formaldehyde condensate, ligninsulfate, polycarboxylate, a salt of polyoxyethylene alkyl ether sulfuric acid ester, polyoxyethylene alkylaryl ether sulfate, polyoxyethylene alkyl ether phosphate and a salt of polyoxyethylene alkylaryl ether phosphoric acid ester; a nonionic surface active agent, such as an oxyalkylene block polymer, polyoxyethylene alkyl ether, polyoxyethylene alkylaryl ether, polyoxyethylene styrylaryl ether, polyoxyethylene glycol alkyl ether, polyoxyethylene hydrogenated castor oil and polyoxyethylene castor oil.

In the present composition, an appropriate blend ratio of cyazofamid (a) to the surface active agent (b) is usually 1:5,000 to 100:1, preferably 0.05:99.95 to 90:10, and more preferably 0.2:99.8 to 80:20, by weight.

If necessary, in addition to the components (a)-(f), an activity-enhancing component can be added to the pesticidal aqueous suspension composition of the present invention. In that case, more excellent effects as a pesticide can be expected. Examples of the activity-enhancing component which can be used include ethoxylated aliphatic amines, such as Frigate (trade name, manufactured by ISK Biosciences Europe S.A.), Genamin T-150 (trade name, manufactured by Clariant), Genamin T-200 (trade name, manufactured by Clariant), Sorpol 7553 (trade name, manufactured by Toho Chemical Industry Co., Ltd.), Sorpol 7409 (trade name, manufactured by Toho Chemical Industry Co., Ltd.), New Kalgen D-3615T (trade name, manufactured by Takemoto Oil and Fat Co., Ltd.), Ethomeen T-25 (trade name), Sorpol 7721 (trade name, manufactured by Toho Chemical Industry Co., Ltd.), New Kalgen D-3605 (trade name, manufactured by Takemoto Oil and Fat Co., Ltd.), Sorpol 7376 (trade name, manufactured by Toho Chemical Industry Co., Ltd.), New Kalgen D-3110 (trade name, manufactured by Takemoto Oil and Fat Co., Ltd.), and Ethomeen C-12 (trade name); polyoxyethylene alkyl ethers, such as ATLOX MBA 11/8 (trade name, manufactured by Uniqema), Synperonic 91/6 (trade name, manufactured by Uniqema), Noigen TDS-70 (trade name, manufactured by Dai-ichi Kogyo Seiyaku Co., Ltd.); alkylsulfosuccinic acid salts, such as New Kalgen EP-70G (trade name, manufactured by Takemoto Oil and Fat Co., Ltd.), AGNIQUE EHS70WE (manufactured by cognis), and Lankropol 4500 (trade name for dioctyl sulfosuccinate, manufactured by Lion Akzo Co., Ltd.); alkyl polyglycosides, such as AGNIQUE PG 8105-G (trade name, manufactured by cognis), AGNIQUE PG 264-G (trade name, manufactured by cognis) and AG6202 (trade name, manufactured by Lion Akzo Co., Ltd.).

Preferable embodiments of the invention are described below.
(1) The present composition, wherein the blend ratio of cyazofamid (a) to the surface active agent (b) is 1:5,000 to 100:1 by weight.
(2) The present composition, wherein an active ingredient of the antifoaming agent (d) is polydimethylsiloxane.
(3) The present composition, wherein the composition is adjusted at a pH of 6-8 by the pH adjustor (e), thereby stabilizing the surface active agent (b).
(4) The present composition, wherein the viscosity-reducing agent (c) is propylene glycol or a potassium salt of polyoxyethylene tristyrylphenyl ether phosphoric acid ester.

### Examples

Now, Examples according to the invention are described below, but it should not be construed that the invention is limited thereto.

In the following examples, comparative examples and reference formulation examples the following components used therein are abbreviated as identified below:
- SILWET 408: SILWET 408, trade name, made by Momentive Performance Materials.
- KF-644: KF-644, trade name, made by Shin-Etsu Chemical Co., Ltd.)
- SILWET L-77: SILWET L-77, trade name, made by Momentive Performance Materials.
- Soprophor FLK/70: Soprophor FLK/70, trade name, Potassium salt of polyoxyethylene tristyrylphenyl ether phosphoric acid ester, made by Rhodia Nicca Ltd.
- Antifoam 432: Rhodorsil Antifoam^{®} 432, trade name, made by Rhodia Nicca Ltd.
- Anti-mousse: Anti-mousse, trade name, made by Belchim Crop Protection.
- Supragil MNS/25: Supragil MNS/25, trade name, Sodium alkylnaphthalene sulfonate-formaldehyde condensate, made by Rhodia Nicca Ltd.
- Supragil MNS/90: Supragil MNS/90, trade name, Sodium alkylnaphthalene sulfonate-formaldehyde condensate, made by Rhodia Nicca Ltd.
- NK EP-70G: New Kalgen EP-70G, trade name, Sodium dioctyl sulfosuccinate, made by Takemoto Oil and Fat Co., Ltd.

### Example 1

| | |
|---|---|
| (1) (a) Active ingredient: Cyazofamid (purity: 96.6%) 25.0 | parts by weight (pbw) |
| (2) (b) Surface active agent: SILWET 408 | 9.0 pbw |
| (3) (c) Viscosity-reducing agent: Soprophor FLK/70 | 2.2 pbw |
| (4) (c) Viscosity-reducing agent: Propylene glycol | 9.0 pbw |
| (5) (d) Antifoaming agent: Antifoam 432 | 0.9 pbw |
| (6) (e) pH adjustor: 0.2 M phosphate buffer (Na₂HPO₄-NaH₂PO₄) | 51.7 pbw |
| (7) (f) Dispersant: (Supragil MNS/25 | 2.2 pbw |

The foregoing components (1) and (3)-(7) were mixed, followed by wet pulverization until the average particle size of cyazofamid reached 0.4 µm, and the component (2) was then added thereto, followed by stirring to obtain an aqueous suspension composition.

### Example 2

| | |
|---|---|
| (1) (a) Active ingredient: Cyazofamid (purity: 93.3%) | 18.9 pbw |
| (2) (b) Surface active agent: KF-644 | 13.4 pbw |
| (3) (c) Viscosity-reducing agent: Propylene glycol | 17.8 pbw |
| (4) (d) Antifoaming agent: Antifoam 432 | 0.1 pbw |
| (5) (d) Antifoaming agent: Anti-mousse | 2.7 pbw |
| (6) (e) pH adjustor: 0.1 M phosphate buffer (Na₂HPO₄-NaH₂PO₄) | 43.5 pbw |
| (7) (f) Dispersant: (Supragil MNS/25 | 3.6 pbw |

The foregoing components (1), (3), (4), (6) and (7) were mixed, followed by wet pulverization until the average particle size of cyazofamid reached 0.7 µm, and the components (2) and (5) were then added thereto, followed by stirring to obtain an aqueous suspension composition.

### Example 3

| | |
|---|---|
| (1) (a) Active ingredient: Cyazofamid (purity: 93.3%) | 17.3 pbw |
| (2) (b) Organosilicone surface active agent: KF-644 | 16.4 pbw |
| (3) (c) Viscosity-reducing agent: Propylene glycol | 16.4 pbw |
| (4) (d) Antifoaming agent: Antifoam 432 | 0.1 pbw |
| (5) (d) Antifoaming agent: Anti-mousse | 2.5 pbw |
| (6) (e) pH adjustor: 0.1M phosphate buffer (Na₂HPO₄-NaH₂PO₄) | 44.0 pbw |
| (7) (f) Dispersant: Supragil MNS/25 | 3.3 pbw |

The foregoing components (1), (3), (4), (6) and (7) were mixed, followed by wet pulverization until the average particle size of cyazofamid reached 0.7 µm, and the component (2) and (5) were then added thereto, followed by stirring to obtain an aqueous suspension composition.

### Example 4

| | |
|---|---|
| (1) (a) Active ingredient: Cyazofamid (purity: 93.3%) | 15.7 pbw |
| (2) (b) Organosilicone surface active agent: KF-644 | 13.9 pbw |
| (3) (c) Viscosity-reducing agent: Soprophor FLK/70 | 1.9 pbw |
| (4) (c) Viscosity-reducing agent: Propylene glycol | 9.3 pbw |
| (5) (d) Antifoaming agent: Anti-mousse | 4.6 pbw |
| (6) (e) pH adjustor: 0.1M phosphate buffer (Na₂HPO₄-NaH₂PO₄) | 52.7 pbw |
| (7) (f) Dispersant: Supragil MNS/25 | 1.9 pbw |

The foregoing components (1), (3), (4), (6) and (7) were mixed, followed by wet pulverization until the average particle size of cyazofamid reached 0.7 µm, and the component (2) and (5) were then added thereto, followed by stirring to obtain an aqueous suspension composition.

### Example 5

| | |
|---|---|
| (1) (a) Active ingredient: Cyazofamid (purity: 93,3%) | 15.7 pbw |
| (2) (b) Organosilicone surface active agent: KF-644 | 13.9 pbw |
| (3) (c) Viscosity-reducing agent: Soprophor FLK/70 | 1.9 pbw |
| (4) (c) Viscosity-reducing agent: Propylene glycol | 9.3 pbw |
| (5) (d) Antifoaming agent: Antifoam 432 | 0.9 pbw |
| (6) (e) pH adjustor: 0.1M phosphate buffer (Na₂HPO₄-NaH₂PO₄) | 56.4 pbw |
| (7) (f) Dispersant: Supragil MNS/25 | 1.9 pbw |

The foregoing components (1) and (3)-(7) were mixed, followed by wet pulverization until the average particle size of cyazofamid reached 0.7 µm, and the component (2) was then added thereto, followed by stirring to obtain an aqueous suspension composition.

### Example 6

| | |
|---|---|
| (1) (a) Active ingredient: Cyazofamid (purity: 93.3%) | 15.7 pbw |
| (2) (b) Organosilicone surface active agent: SILWET L-77 | 9.3 pbw |
| (3) (c) Viscosity-reducing agent: Soprophor FLK/70 | 1.9 pbw |
| (4) (c) Viscosity-reducing agent: Propylene glycol | 9.3 pbw |
| (5) (d) Antifoaming agent: Anti-mousse | 2.8 pbw |
| (6) (e) pH adjustor: 0.1M phosphate buffer (Na₂HPO₄-NaH₂PO₄) | 59.1 pbw |
| (7) (f) Dispersant: Supragil MNS/25 | 1.9 pbw |

The foregoing components (1), (3), (4), (6) and (7) were mixed, followed by wet pulverization until the average particle size of cyazofamid reached 0.7 µm, and the component (2) and (5) were then added thereto, followed by stirring to obtain an aqueous suspension composition.

### Example 7

| | |
|---|---|
| (1) (a) Active ingredient: Cyazofamid (purity: 96.6%) | 36.3 pbw |
| (2) (b) Organosilicone surface active agent: SILWET 408 | 4.3 pbw |
| (3) (c) Viscosity-reducing agent: Soprophor FLK/70 | 2.2 pbw |
| (4) (c) Viscosity-reducing agent: Propylene glycol | 15.1 pbw |
| (5) (d) Antifoaming agent: Antifoam 432 | 0.4 pbw |
| (6) (e) pH adjustor: 0.2M phosphate buffer (Na₂HPO₄-NaH₂PO₄) | 36.9 pbw |
| (7) (f) Dispersant:Supragil MNS/90 | 2.2 pbw |
| (8) Activity-enhancing component: NK EP-70G | 2.6 pbw |

The foregoing components (1) and (3)-(7) were mixed, followed by wet pulverization until the average particle size of cyazofamid reached 0.5 µm, and the component (2) and (8) were then added thereto, followed by stirring to obtain an aqueous suspension composition.

### Comparative Example 1

| | |
|---|---|
| (1) (a) Active ingredient: Cyazofamid (purity: 97.3%) | 24.8 pbw |
| (2) (b) Organosilicone surface active agent: KF-644 | 9.0 pbw |
| (3) (c) Viscosity-reducing agent: Propylene glycol | 9.0 pbw |
| (4) (d) Antifoaming agent: Antifoam 432 | 0.9 pbw |
| (5) (e) pH adjustor: 0.2M phosphate buffer (Na₂HPO₄-NaH₂PO₄) | 52.7 pbw |
| (6) (f) Dispersant: Supragil MNS/25 | 3.6 pbw |

The foregoing components (1), (3), (5) and (6) and 0.1 pbw of the component (4) were mixed, followed by wet pulverization until the average particle size of cyazofamid reached 0.5 µm, and the component (2) and residual 0.8 pbw of the component (4) were then added thereto, followed by stirring to obtain an aqueous suspension composition.

### Comparative Example 2

| | |
|---|---|
| (1) (a) Active ingredient: Cyazofamid (purity: 93.3%) | 18.9 pbw |
| (2) (b) Organosilicone surface active agent: KF-644 | 13.4 pbw |
| (3) (d) Antifoaming agent: Antifoam 432 | 0.1 pbw |
| (4) (d) Antifoaming agent: Anti-mousse | 2.7 pbw |
| (5) (e) pH adjustor: 0.1M phosphate buffer (Na₂HPO₄-NaH₂PO₄) | 61.3 pbw |
| (6) (f) Dispersant: Supragil MNS/25 | 3.6 pbw |

The foregoing components (1), (3) (5) and (6) were mixed, followed by wet pulverization until the average particle size of Cyazofamid reached 0.7 µm, and the component (2) and (4) were then added thereto, followed by stirring to obtain an aqueous suspension composition.

### Comparative Example 3

| | |
|---|---|
| (1) (a) Active ingredient: Cyazofamid (purity: 93.3%) | 17.3 pbw |
| (2) (b) Organosilicone surface active agent: KF-644 | 16.4 pbw |
| (3) (d) Antifoaming agent: Antifoam 432 | 0.1 pbw |
| (4) (d) Antifoaming agent: Anti-mousse | 2.5 pbw |
| (5) (e) pH adjustor: 0.1M phosphate buffer (Na₂HPO₄-NaH₂PO₄) | 60.4 pbw |
| (6) (f) Dispersant: Supragil MNS/25 | 3.3 pbw |

The foregoing components (1), (3) (5) and (6) were mixed, followed by wet pulverization until the average particle size of Cyazofamid reached 0.7 µm, and the component (2) and (4) were then added thereto, followed by stirring to obtain an aqueous suspension composition.

### Comparative Example 4

| | |
|---|---|
| (1) (a) Active ingredient: Cyazofamid (purity: 93.3%) | 15.7 pbw |
| (2) (b) Organosilicone surface active agent: KF-644 | 13.9 pbw |
| (3) (c) Viscosity-reducing agent: Soprophor FLK/70 | 1.9 pbw |
| (4) (c) Viscosity-reducing agent: Propylene glycol | 9.3 pbw |
| (5) (e) pH adjustor: 0.1M phosphate buffer (Na₂HPO₄-NaH₂PO₄) | 57.3 pbw |
| (6) (f) Dispersant: Supragil MNS/25 | 1.9 pbw |

The foregoing components (1) and (3)-(6) were mixed, followed by wet pulverization until the average particle size of Cyazofamid reached 0.7 µm, and the component (2) was then added thereto, followed by stirring to obtain an aqueous suspension composition.

### Comparative Example 5

| | |
|---|---|
| (1) (a) Active ingredient: Cyazofamid (purity: 93.3%) | 15.7 pbw |
| (2) (b) Organosilicone surface active agent: SILWET L-77 | 9.3 pbw |
| (3) (c) Viscosity-reducing agent: Soprophor FLK/70 | 1.9 pbw |
| (4) (c) Viscosity-reducing agent: Propylene glycol | 9.3 pbw |
| (5) (e) pH adjustor: 0.1M phosphate buffer (Na₂HPO₄-NaH₂PO₄) | 61.9 pbw |
| (6) (f) Dispersant: Supragil MNS/25 | 1.9 pbw |

The foregoing components (1) and (3)-(6) were mixed, followed by wet pulverization until the average particle size of Cyazofamid reached 0.7 µm, and the component (2) was then added thereto, followed by stirring to obtain an aqueous suspension composition.

### Comparative Example 6

| | |
|---|---|
| (1) (a) Active ingredient: Cyazofamid (purity: 96.6%) | 36.3 pbw |
| (2) (b) Organosilicone surface active agent: SILWET 408 | 4.3 pbw |
| (3) (c) Viscosity-reducing agent: Propylene glycol | 15.1 pbw |
| (4) (d) Antifoaming agent: Antifoam 432 | 0.4 pbw |
| (5) (e) pH adjustor: 0.2M phosphate buffer (Na₂HPO₄-NaH₂PO₄) | 37.9 pbw |
| (6) (f) Dispersant: Supragil MNS/90 | 3.4 pbw |
| (7) Activity-enhancing component: NK EP-70G | 2.6 pbw |

The foregoing components (1) and (3)-(6) were mixed, followed by wet pulverization until the average particle size of Cyazofamid reached 0.8 µm, and the component (2) and (7) were then added thereto, followed by stirring to obtain an aqueous suspension composition.

### Test Example 1 (Viscosity test)

### (1) Test method:

Each of the aqueous suspension compositions obtained in Examples 1-3 and 7 and Comparative Examples 1-3 and 6 was filled in a 30-mL glass-made bottle, and after capping, the glass-made bottle was soaked in a constant temperature water bath at 20°C. Thirty minutes later, the glass-made bottle was taken out, and the viscosity of the aqueous suspension composition was measured using a B-type viscometer. The results are shown in Table 1.

### (2) Viscosity measurement condition:

Rotor: No. 3
Rotation number of rotor: 60 rpm
Rotation time of rotor: 60 seconds

**[Table 1]**

| Kinds of Ingredient | Ingredient | Ex. 1 | Comp. Ex. 1 | Ex. 2 | Comp. Ex. 2 | Ex. 3 | Comp. Ex. 3 | Ex. 7 | Comp. Ex. 6 |
|---|---|---|---|---|---|---|---|---|---|
| (a) | cyazofamid | 25.0 | 24.8 | 18.9 | 18.9 | 17.3 | 17.3 | 36.3 | 36.3 |
| (b) | SILWET 408 | 9.0 | - | - | - | - | - | 4.3 | 4.3 |
| (b) | KF-644 | - | 9.0 | 13.4 | 13.4 | 16.4 | 16.4 | - | - |
| (b) | SILWET L-77 | - | - | - | - | - | - | - | - |
| (c) | Soprophor FLK/70 | 2.2 | - | - | - | - | - | 2.2 | - |
| (c) | Propylene glycol | 9.0 | 9.0 | 17.8 | - | 16.4 | - | 15.1 | 15.1 |
| (d) | Antifoam 432 | 0.9 | 0.9 | 0.1 | 0.1 | 0.1 | 0.1 | 0.4 | 0.4 |
| (d) | Anti-mousse | - | - | 2.7 | 2.7 | 2.5 | 2.5 | - | - |
| (e) | 0.2M phosphate buffer | 51.7 | 52.7 | - | - | - | - | 36.9 | 37.9 |
| (e) | 0.1M phosphate buffer | - | - | 43.5 | 61.3 | 44.0 | 60.4 | - | - |
| (f) | Supragil MNS/25 | 2.2 | 3.6 | 3.6 | 3.6 | 3.3 | 3.3 | - | - |
| (f) | Supragil MNS/90 | - | - | - | - | - | - | 2.2 | 3.4 |
| Activity-enhancing component | NKEP-70G | - | - | - | - | - | - | 2.6 | 2.6 |
| | Viscosity (mPa·S) | 344 | 590 | 219 | 419 | 273 | 350 | 610 | 1030 |

It is understood from the results shown in Table 1 that when propylene glycol is used as a dihydric alcohol which is the viscosity-reducing agent in the present invention, the increase in the viscosity of the aqueous suspension composition is suppressed. In addition, it is understood from the results shown in Table 1 that when a potassium salt of polyoxyethylene tristyrylphenyl ether phosphoric acid ester is used as a polyoxyethylene styrylphenyl ether anionic surface active agent which is the viscosity-reducing agent in the present invention, the increase in the viscosity of the aqueous suspension composition is suppressed, too.

### Test Example 2 (Foaming property test example)

An aqueous dispersion of each of the aqueous suspension compositions of Examples 4-6 and Comparative Examples 4 and 5 was prepared so as to have a concentration of the organosilicone surface active agent of 500 ppm. In a measuring cylinder with ground stopper having a volume of 250 mL, 10 mL of the aqueous dispersion was charged, and 100 mL of water was added, followed by putting the stopper in the measuring cylinder. Thereafter, the measuring cylinder was overturned 30 times for one minute and then allowed to stand. One minute later, the volume of foams was measured. The results are shown in Table 2.

**[Table 2]**

| Kinds of Ingredient | Ingredient | Ex. 4 | Ex. 5 | Comp. Ex. 4 | Ex. 6 | Comp. Ex. 5 |
|---|---|---|---|---|---|---|
| (a) | cyazofamid | 15.7 | 15.7 | 15.7 | 15.7 | 15.7 |
| (b) | KF-644 | 13.9 | 13.9 | 13.9 | - | - |
| (b) | SILWET L-77 | - | - | - | 9.3 | 9.3 |
| (c) | Soprophor FLK/70 | 1.9 | 1.9 | 1.9 | 1.9 | 1.9 |
| (c) | Propylene glycol | 9.3 | 9.3 | 9.3 | 9.3 | 9.3 |
| (d) | Antifoam 432 | - | 0.9 | - | - | - |
| (d) | Anti-mousse | 4.6 | - | - | 2.8 | - |
| (e) | 0.1M phosphate buffer | 52.7 | 56.4 | 57.3 | 59.1 | 61.9 |
| (f) | Supragil MNS/25 | 1.9 | 1.9 | 1.9 | 1.9 | 1.9 |
| (f) | Supragil MNS/90 | - | - | - | - | - |
| | Volume of foam (ml) | 16 | 26 | 50 | 13 | 38 |

It is understood from the results shown in Table 2 that when the silicone antifoaming agent in the present invention is used, the foaming property of the aqueous dispersion of the aqueous suspension composition is remarkably suppressed.

Next, Reference Formulation Examples are described (not according to the claimed invention due to the presence, as the active ingredient, a compound other than cyazofamid).

### Reference Formulation Example 1

| | |
|---|---|
| (1) (a) Active ingredient: Fluazinam (purity: 97.7%) | 25.0 pbw |
| (2) (b) Organosilicone surface active agent: SILWET 408 | 9.0 pbw |
| (3) (c) Viscosity-reducing agent: Soprophor FLK/70 | 2.2 pbw |
| (4) (c) Viscosity-reducing agent: Propylene glycol | 9.0 pbw |
| (5) (d) Antifoaming agent: Antifoam 432 | 0.9 pbw |
| (6) (e) pH adjustor: 0.2M phosphate buffer (Na₂HPO₄-NaH₂PO₄) | 51.7 pbw |
| (7) (f) Dispersant: Supragil MNS/25 | 2.2 pbw |

The foregoing components (1) and (3)-(7) are mixed, followed by wet pulverization until the average particle size of fluazinam reached 1.0 µm, and the component (2) is then added thereto, followed by stirring to obtain an aqueous suspension composition.

### Reference Formulation Example 2

| | |
|---|---|
| (1) (a) Active ingredient: Fluazinam (purity: 97.7%) | 18.9 pbw |
| (2) (b) Organosilicone surface active agent: KF-644 | 13.4 pbw |
| (3) (c) Viscosity-reducing agent: Propylene glycol | 17.8 pbw |
| (4) (d) Antifoaming agent: Antifoam 432 | 0.1 pbw |
| (5) (d) Antifoaming agent: Anti-mousse | 2.7 pbw |
| (6) (e) pH adjustor: 0.1M phosphate buffer (Na₂HPO₄-NaH₂PO₄) | 43.5 pbw |
| (7) (f) Dispersant: Supragil MNS/25 | 3.6 pbw |

The foregoing components (1), (3) (4), (6) and (7) are mixed, followed by wet pulverization until the average particle size of fluazinam reached 0.7 µm, and the component (2) and (5) are then added thereto, followed by stirring to obtain an aqueous suspension composition.

### Reference Formulation Example 3

| | |
|---|---|
| (1) (a) Active ingredient: Fluazinam (purity: 97.7%) | 17.3 pbw |
| (2) (b) Organosilicone surface active agent: KF-644 | 16.4 pbw |
| (3) (c) Viscosity-reducing agent: Propylene glycol | 16.4 pbw |
| (4) (d) Antifoaming agent: Antifoam 432 | 0.1 pbw |
| (5) (d) Antifoaming agent: Anti-mousse | 2.5 pbw |
| (6) (e) pH adjustor: 0.1M phosphate buffer (Na₂HPO₄-NaH₂PO₄) | 44.0 pbw |
| (7) (f) Dispersant: Supragil MNS/25 | 3.3 pbw |

The foregoing components (1), (3) (4), (6) and (7) are mixed, followed by wet pulverization until the average particle size of fluazinam reached 0.7 µm, and the component (2) and (5) are then added thereto, followed by stirring to obtain an aqueous suspension composition.

### Reference Formulation Example 4

| | |
|---|---|
| (1) (a) Active ingredient: Fluazinam | 15.7 pbw |
| (2) (b) Organosilicone surface active agent: KF-644 | 13.9 pbw |
| (3) (c) Viscosity-reducing agent: Soprophor FLK/70 | 1.9 pbw |
| (4) (c) Viscosity-reducing agent: Propylene glycol | 9.3 pbw |
| (5) (d) Antifoaming agent: Anti-mousse | 4.6 pbw |
| (6) (e) pH adjustor: 0.1M phosphate buffer (Na₂HPO₄-NaH₂PO₄) | 52.7 pbw |
| (7) (f) Dispersant: Supragil MNS/25 | 1.9 pbw |

The foregoing components (1), (3) (4), (6) and (7) are mixed, followed by wet pulverization until the average particle size of fluazinam reached 0.7 µm, and the component (2) and (5) are then added thereto, followed by stirring to obtain an aqueous suspension composition.

### Reference Formulation Example 5

| | |
|---|---|
| (1) (a) Active ingredient: Fluazinam (purity: 97.7%) | 15.7 pbw |
| (2) (b) Organosilicone surface active agent: KF-644 | 13.9 pbw |
| (3) (c) Viscosity-reducing agent: Soprophor FLK/70 | 1.9 pbw |
| (4) (c) Viscosity-reducing agent: Propylene glycol | 9.3 pbw |
| (5) (d) Antifoaming agent: Antifoam 432 | 0.9 pbw |
| (6) (e) pH adjustor: 0.1M phosphate buffer (Na₂HPO₄-NaH₂PO₄) | 56.4 pbw |
| (7) (f) Dispersant: Supragil MNS/25 | 1.9 pbw |

The foregoing components (1) and (3)-(7) are mixed, followed by wet pulverization until the average particle size of fluazinam reached 0.7 µm, and the component (2) is then added thereto, followed by stirring to obtain an aqueous suspension composition.

### Reference Formulation Example 6

| | |
|---|---|
| (1) (a) Active ingredient: Fluazinam (purity: 97.7%) | 15.7 pbw |
| (2) (b) Organosilicone surface active agent: SILWET L-77 | 9.3 pbw |
| (3) (c) Viscosity-reducing agent: Soprophor FLK/70 | 1.9 pbw |
| (4) (c) Viscosity-reducing agent: Propylene glycol | 9.3 pbw |
| (5) (d) Antifoaming agent: Anti-mousse | 2.8 pbw |
| (6) (e) pH adjustor: 0.1M phosphate buffer (Na₂HPO₄-NaH₂PO₄) | 59.1 pbw |
| (7) (f) Dispersant: Supragil MNS/25 | 1.9 pbw |

The foregoing components (1), (3) (4), (6) and (7) are mixed, followed by wet pulverization until the average particle size of fluazinam reached 0.7 µm, and the component (2) and (5) are then added thereto, followed by stirring to obtain an aqueous suspension composition.

### Reference Formulation Example 7

| | |
|---|---|
| (1) (a) Active ingredient: Fluazinam (purity: 97.7%) | 36.3 pbw |
| (2) (b) Organosilicone surface active agent: SILWET 408 | 4.3 pbw |
| (3) (c) Viscosity-reducing agent: Soprophor FLK/70 | 2.2 pbw |
| (4) (c) Viscosity-reducing agent: Propylene glycol | 15.1 pbw |
| (5) (d) Antifoaming agent: Antifoam 432 | 0.4 pbw |
| (6) (e) pH adjustor: 0.2M phosphate buffer (Na₂HPO₄-NaH₂PO₄) | 36.9 pbw |
| (7) (f) Dispersant: Supragil MNS/90 | 2.2 pbw |
| (8) Activity-enhancing component: NK EP-70G | 2.6 pbw |

The foregoing components (1) and (3)-(7) are mixed, followed by wet pulverization until the average particle size of fluazinam reached 1.0 µm, and the component (2) and (8) are then added thereto, followed by stirring to obtain an aqueous suspension composition.

### Reference Formulation Example 8

| | |
|---|---|
| (1) (a) Active ingredient: Amisulbrom | 25.0 pbw |
| (2) (b) Organosilicone surface active agent: SILWET 408 | 9.0 pbw |
| (3) (c) Viscosity-reducing agent: Soprophor FLK/70 | 2.2 pbw |
| (4) (c) Viscosity-reducing agent: Propylene glycol | 9.0 pbw |
| (5) (d) Antifoaming agent: Antifoam 432 | 0.9 pbw |
| (6) (e) pH adjustor: 0.2M phosphate buffer (Na₂HPO₄-NaH₂PO₄) | 51.7 pbw |
| (7) (f) Dispersant: Supragil MNS/25 | 2.2 pbw |

The foregoing components (1) and (3)-(7) are mixed, followed by wet pulverization until the average particle size of amisulbrom reached 0.4 µm, and the component (2) is then added thereto, followed by stirring to obtain an aqueous suspension composition.

### Reference Formulation Example 9

| | |
|---|---|
| (1) (a) Active ingredient: Amisulbrom | 18.9 pbw |
| (2) (b) Organosilicone surface active agent: KF-644 | 13.4 pbw |
| (3) (c) Viscosity-reducing agent: Propylene glycol | 17.8 pbw |
| (4) (d) Antifoaming agent: Antifoam 432 | 0.1 pbw |
| (5) (d) Antifoaming agent: Anti-mousse | 2.7 pbw |
| (6) (e) pH adjustor: 0.1M phosphate buffer (Na₂HPO₄-NaH₂PO₄) | 43.5 pbw |
| (7) (f) Dispersant: Supragil MNS/25 | 3.6 pbw |

The foregoing components (1), (3) (4), (6) and (7) are mixed, followed by wet pulverization until the average particle size of amisulbrom reached 0.7 µm, and the component (2) and (5) are then added thereto, followed by stirring to obtain an aqueous suspension composition.

### Reference Formulation Example 10

| | |
|---|---|
| (1) (a) Active ingredient: Amisulbrom | 17.3 pbw |
| (2) (b) Organosilicone surface active agent: KF-644 | 16.4 pbw |
| (3) (c) Viscosity-reducing agent: Propylene glycol | 16.4 pbw |
| (4) (d) Antifoaming agent: Antifoam 432 | 0.1 pbw |
| (5) (d) Antifoaming agent: Anti-mousse | 2.5 pbw |
| (6) (e) pH adjustor: 0.1M phosphate buffer (Na₂HPO₄-NaH₂PO₄) | 44.0 pbw |
| (7) (f) Dispersant: Supragil MNS/25 | 3.3 pbw |

The foregoing components (1), (3) (4), (6) and (7) are mixed, followed by wet pulverization until the average particle size of amisulbrom reached 0.7 µm, and the component (2) and (5) are then added thereto, followed by stirring to obtain an aqueous suspension composition.

### Reference Formulation Example 11

| | |
|---|---|
| (1) (a) Active ingredient: Amisulbrom | 15.7 pbw |
| (2) (b) Organosilicone surface active agent: KF-644 | 13.9 pbw |
| (3) (c) Viscosity-reducing agent: Soprophor FLK/70 | 1.9 pbw |
| (4) (c) Viscosity-reducing agent: Propylene glycol | 9.3 pbw |
| (5) (d) Antifoaming agent: Anti-mousse | 4.6 pbw |
| (6) (e) pH adjustor: 0.1M phosphate buffer (Na₂HPO₄-NaH₂PO₄) | 52.7 pbw |
| (7) (f) Dispersant: Supragil MNS/25 | 1.9 pbw |

The foregoing components (1), (3) (4), (6) and (7) are mixed, followed by wet pulverization until the average particle size of amisulbrom reached 0.7 µm, and the component (2) and (5) are then added thereto, followed by stirring to obtain an aqueous suspension composition.

### Reference Formulation Example 12

| | |
|---|---|
| (1) (a) Active ingredient: amisulbrom | 15.7 pbw |
| (2) (b) Organosilicone surface active agent: KF-644 | 13.9 pbw |
| (3) (c) Viscosity-reducing agent: Soprophor FLK/70 | 1.9 pbw |
| (4) (c) Viscosity-reducing agent: Propylene glycol | 9.3 pbw |
| (5) (d) Antifoaming agent: Antifoam 432 | 0.9 pbw |
| (6) (e) pH adjustor: 0.1M phosphate buffer (Na₂HPO₄-NaH₂PO₄) | 56.4 pbw |
| (7) (f) Dispersant: Supragil MNS/25 | 1.9 pbw |

The foregoing components (1) and (3)-(7) are mixed, followed by wet pulverization until the average particle size of amisulbrom reached 0.7 µm, and the component (2) is then added thereto, followed by stirring to obtain an aqueous suspension composition.

### Reference Formulation Example 13

| | |
|---|---|
| (1) (a) Active ingredient: amisulbrom | 15.7 pbw |
| (2) (b) Organosilicone surface active agent: SILWET L-77 | 9.3 pbw |
| (3) (c) Viscosity-reducing agent: Soprophor FLK/70 | 1.9 pbw |
| (4) (c) Viscosity-reducing agent: Propylene glycol | 9.3 pbw |
| (5) (d) Antifoaming agent: Anti-mousse | 2.8 pbw |
| (6) (e) pH adjustor: 0.1M phosphate buffer (Na₂HPO₄-NaH₂PO₄) | 59.1 pbw |
| (7) (f) Dispersant: Supragil MNS/25 | 1.9 pbw |

The foregoing components (1), (3) (4), (6) and (7) are mixed, followed by wet pulverization until the average particle size of amisulbrom reached 0.7 µm, and the component (2) and (5) are then added thereto, followed by stirring to obtain an aqueous suspension composition.

### Reference Formulation Example 14

| | |
|---|---|
| (1) (a) Active ingredient: amisulbrom | 36.3 pbw |
| (2) (b) Organosilicone surface active agent: SILWET 408 | 4.3 pbw |
| (3) (c) Viscosity-reducing agent: Soprophor FLK/70 | 2.2 pbw |
| (4) (c) Viscosity-reducing agent: Propylene glycol | 15.1 pbw |
| (5) (d) Antifoaming agent: Antifoam 432 | 0.4 pbw |
| (6) (e) pH adjustor: 0.2M phosphate buffer (Na₂HPO₄-NaH₂PO₄) | 36.9 pbw |
| (7) (f) Dispersant: Supragil MNS/90 | 2.2 pbw |
| (8) Activity-enhancing component: NK EP-70G | 2.6 pbw |

The foregoing components (1), (3)-(7) are mixed, followed by wet pulverization until the average particle size of amisulbrom reached 0.5 µm, and the component (2) and (8) are then added thereto, followed by stirring to obtain an aqueous suspension composition.

### Industrial Applicability

The present invention provides a pesticidal aqueous suspension composition which is suppressed in increasing in the viscosity, is easy to measure, hardly generates foams at the time of dilution with water and is easy to prepare a spray solution.

## Claims

1. A pesticidal aqueous suspension composition comprising
(a) cyazofamid,
(b) a polyalkylene-modified polymethylsiloxane non-ionic surface active agent,
(c) a viscosity-reducing agent selected from dihydric alcohol and a polyoxyethylene styrylphenyl ether anionic surface active agent,
(d) an antifoaming agent,
(e) a pH adjustor selected from a buffer, an acid, a salt and a base, and
(f) a dispersant.

2. The composition of claim 1, wherein the weight mixing ratio of (a) to (b) is 1:5,000 to 100:1.

3. The composition of claim 1, wherein an active ingredient of (d) is polydimethylsiloxane.

4. The composition of claim 1, wherein the composition has a pH of 6-8.

5. The composition of claim 1, wherein (c) is propylene glycol or a potassium salt of polyoxyethylene tristyrylphenyl ether phosphoric acid ester.

## Patentansprüche

1. Wässrige, pestizide Suspensionszusammensetzung, umfassend
(a) Cyazofamid,
(b) ein Polyalkylen-modifiziertes, nicht-ionisches Polymethylsiloxan-Tensid,
(c) ein viskositätsreduzierendes Mittel, ausgewählt aus zweiwertigem Alkohol und einem anionischen Polyoxyethylenstyrylphenylether-Tensid,
(d) ein Antischaummittel,
(e) ein pH-Einstellmittel, ausgewählt aus einem Puffer, einer Säure, einem Salz und einer Base, und
(f) ein Dispergiermittel.

2. Zusammensetzung gemäß Anspruch 1, worin das Gewichtsmischungsverhältnis von (a) zu (b) 1:5.000 bis 100:1 ist.

3. Zusammensetzung gemäß Anspruch 1, worin ein Wirkstoff von (d) Polydimethylsiloxan ist.

4. Zusammensetzung gemäß Anspruch 1, worin die Zusammensetzung einen pH von 6-8 aufweist.

5. Zusammensetzung gemäß Anspruch 1, worin (c) Propylenglykol oder ein Kaliumsalz von Polyoxyethylentristyrylphenyletherphosphorsäureester ist.

## Revendications

1. Composition pesticide sous forme de suspension aqueuse comprenant
(a) du cyazofamide,
(b) un agent tensioactif non ionique de polyméthylsiloxane modifié par des polyalkylènes,
(c) un agent réducteur de viscosité, choisi parmi un alcool dihydrique et un agent tensioactif anionique à base d'éther styrylphénylique polyoxyéthyléné,
(d) un agent antimoussant,
(e) un ajusteur de pH choisi parmi un tampon, un acide, un sel et une base, et
(f) un dispersant.

2. Composition selon la revendication 1, dans laquelle le rapport du mélange en poids de (a) sur (b) est de 1:5 000 à 100:1.

3. Composition selon la revendication 1, dans laquelle un ingrédient actif de (d) est du polydiméthylsiloxane.

4. Composition selon la revendication 1, dans laquelle la composition présente un pH de 6-8.

5. Composition selon la revendication 1, dans laquelle (c) est du propylèneglycol ou un sel de potassium d'un ester de polyoxyéthylène-tristyrylphényléther d'acide phosphorique.
